(19) Europäisches Patentamt / European Patent Office / Office européen des brevets

(11) **EP 4 345 601 A1**

(12) **EUROPEAN PATENT APPLICATION**

(43) Date of publication:
**03.04.2024 Bulletin 2024/14**

(21) Application number: **22382887.2**

(22) Date of filing: **27.09.2022**

(51) International Patent Classification (IPC):
**G06F 7/58** (2006.01)

(52) Cooperative Patent Classification (CPC):
**G06F 7/588**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Quside Technologies S.L.**
**08860 Castelldefels (ES)**

(72) Inventor: **Martin, Ferran**
**Castelldefels (ES)**

(74) Representative: **Grünecker Patent- und
Rechtsanwälte
PartG mbB
Leopoldstraße 4
80802 München (DE)**

(54) **COMPUTER-IMPLEMENTED METHOD FOR OBTAINING INFORMATION ASSOCIATED WITH A CHARACTERISTIC OF ENTROPY GENERATED BY A PHYSICAL ENTROPY GENERATOR**

(57) Computer-implemented method for obtaining information associated with a characteristic of entropy generated by a physical entropy generator, the method comprising:
obtaining, from a distribution function of a signal output by the physical entropy generator, at least two percentiles of the distribution function;
deriving, from a relation of the at least two percentiles, information associated with the characteristic of the generated entropy.

EP 4 345 601 A1

FIG. 1

## Description

The present disclosure is related to a computer-implemented method for obtaining information associated with a characteristic of entropy generated by a physical entropy generator according to independent claim 1 and a computing system according to claim 13.

## Prior art

Physical entropy generators have become more and more used, particularly in the context of encryption and simulation, where obtaining highly reliable entropy (for example, in the form of truly random numbers) is required.

In contrast to algorithmic entropy generators like pseudo random number generators, physical entropy generators generate entropy (for example, a sequence of bits) that is truly random because the entropy is obtained from inherently unpredictable physical processes. For example, phase-diffusion systems and particularly the phase relation of two differently driven laser diodes have been employed in the past in order to generate entropy at high output rates (for example, several megabits or gigabits per second).

While some physical entropy generators are, in principle, able to generate entropy (for example, random numbers) with a uniform probability distribution, physical entropy generators are subject to environmental influences and other effects that may have an impact on the characteristic of the generated entropy under real conditions.

For example, the phase relation of a constantly driven laser diode and a laser diode driven in pulse mode may, in theory, generate random numbers with a Gaussian probability distribution. However, depending on the temperature, the phase of the laser diode driven in pulse mode may be biased towards a particular phase relative to the constantly driven laser diode. This influences the probability distribution and may cause a bias towards particular phase relations so that even though the obtained random numbers are still almost perfectly random, there no longer is a Gaussian probability distribution which makes the generated random numbers less reliable or, equivalently, results in less entropy being provided per entropy cycle of the physical entropy generator. This can make it easier for malicious attackers to, for example, break encryption algorithms that rely on that entropy source to work. Quantification of these influences, preferably in real-time, is therefore needed.

Apart from environmental influences, the amount of entropy generated per entropy cycle (i.e. the amount of entropy per generated random bit) of a physical entropy generator or other characteristics of the entropy output by the physical entropy generator can be of interest for example in order to determine whether the generated entropy can be used for the intended purpose (for example encryption of communication).

## Object

Starting from the known prior art, one object of the present disclosure, therefore, is to provide a method and a computing system for obtaining information associated with a characteristic of entropy of a physical random number generator.

## Solution

This problem is solved by the computer-implemented method for obtaining information associated with a characteristic of entropy according to independent claim 1 and the computing system according to claim 12. Preferred embodiments are provided in the dependent claims.

The computer-implemented method for obtaining information associated with a characteristic of entropy generated by a physical entropy generator according to the invention comprises:

obtaining, from a distribution function of a signal output by the physical entropy generator, at least two percentiles of the distribution function;
deriving, from a relation of the at least two percentiles, information associated with the characteristic of the generated entropy.

Particularly, the distribution function may be a cumulative distribution function or a probability distribution function of the signal output by the physical entropy generator.

It has been found by the inventors that there exist relationships between characteristics of the overall generated entropy and percentiles of the distribution function derived from the generated entropy source. Particularly, quotients and differences of particular percentiles of the distribution function have been found to be related to the minimum amount of entropy and to particularly constitute or be related to a lower bound of the entropy generated by the physical entropy generator per bit of entropy generated. By obtaining such information on characteristics of the generated entropy employing computationally simple operations on percentiles, it is possible to obtain, at high rates, information on, for example, potential biasing or the amount of entropy generated per bit and to thereby observe whether modifications to the physical entropy generator are necessary (for example changing its temperature or the like).

In one embodiment, the at least two percentiles comprise the second, third and fourth quartiles.

It has surprisingly been found by the inventors that, by determining only three quartiles of the distribution function, like the cumulative distribution function, it is possible to determine a minimum amount of entropy generated per cycle of a physical entropy generator. An entropy cycle of a physical entropy generator may be the generation of a single random bit or the generation of a single random number, for example.

While the actual amount of entropy generated per bit is not necessarily determined in this embodiment, a reliable lower bound for the entropy generated per cycle of the physical entropy generator is obtained, which can subsequently allow for determining whether the entropy generated is sufficiently reliable for the process in which it is to be used (for example encryption) or not.

In a more specific embodiment, the relation comprises calculating a quartile difference of a difference between the fourth and third quartile and a difference between the third and second quartile.

In this context, the quartile difference means a difference of differences. In the present embodiment, the difference between the subtraction of the fourth and third quartiles and the subtraction of the third and second quartiles. By having to only use three quartiles, the computational complexity of the process is reduced, which allows for determining the characteristic of entropy generated by the physical entropy generator at higher rates, thereby allowing for real-time monitoring of the behaviour of the physical entropy generator and the entropy generated by it.

In a further embodiment, the deriving comprises determining, if the quartile difference is smaller than a threshold, that the entropy per bit generated by the physical entropy generator is larger than a minimum entropy threshold per bit. Particularly, the threshold may be 0 but can also be any other number depending on the actual application. The minimum entropy threshold will be a value larger than 0 and may, for example, be obtained from considerations regarding what requirements the entropy has to fulfil when it is used later.

It has surprisingly been found that if the quartile difference is smaller than 0, the physical entropy generator produces random bits with a minimum entropy of a particular amount. As the calculating of differences is computationally comparably simple, this approach allows for determining the minimum entropy generated per cycle of the physical entropy generator with reduced computational complexity, thereby increasing the frequency or rate at which this determination can be performed, thus allowing for real-time or almost real-time monitoring of the characteristics of the physical entropy generator.

In one embodiment, the relation comprises calculating a quotient of the difference between the fourth and third quartile and the difference between the fourth and second quartile.

More particularly, it can be provided that the deriving comprises determining, based on the quotient, a maximum trustworthy minimum entropy per bit generated by the physical entropy generator.

It has surprisingly been found that by using the quotient of the difference between the fourth and third quartile and the difference between the fourth and second quartile, it is possible to determine a minimum entropy amount or potential minimum entropy that is definitely reliable. This means that, even though other determination methods of the minimum entropy generated may yield different results, the result obtained with this embodiment constitutes the absolute minimum of all potential minimum entropy values that is definitely generated per cycle of the physical entropy generator.

The computer-implemented method may, in one embodiment, further comprise comparing the derived information associated with the characteristic to a characteristic threshold and obtaining a comparison result therefrom and may further comprise providing an output based on the comparison result.

The output can, for example, be an acoustic output or a visual output on a display device and may provide information to a user whether, in view of the application in which the entropy is to be used, the characteristics of the physical entropy generator suffice.

If, for example, the entropy generated per entropy cycle of the physical entropy generator is below a threshold of, for example, 0.92bit of entropy per bit generated by the physical entropy generator, then this can be insufficient for particular applications like encryption. The discontinuing of the entropy generation can ensure that the thereby generated entropy is not further used in encryption so as to ensure that unreliably encrypted information is not unintentionally performed.

Moreover, the method may comprise performing the obtaining and deriving periodically or continuously or based on receiving an indicator indicating that the obtaining and/or deriving are to be performed.

A continuous deriving of information associated with the characteristic of the generated entropy allows for real-time monitoring of these characteristics. However, this may be computationally expensive or may even reduce the frequency at which entropy can be generated. It can thus also be advantageous to derive the information associated with the characteristic of the characteristic entropy only on a periodic basis (for example, every second or every 10 seconds or every minute or once per hour, or depending on the number of entropy cycles of the physical entropy generator that have been performed after lastly determining the information associated with the characteristic of the generated entropy). The deriving of the respective information depending on an indicator indicating that the obtaining and/or deriving are to be performed can encompass obtaining sensor information from a temperature sensor or a tremor sensor associated with the physical entropy generator indicates that the temperature or tremor (or other characteristic) of or related to the physical entropy generator. If this information exceeds a particular threshold that may usually be regarded as having an impact on the generated entropy, the obtaining and/or deriving may performed so as to ensure that even under these changed conditions the generated entropy exhibits the required characteristics. Alternatively, the derived information may be used to determine that actions need to be taken. This can ensure reliable generation and use of entropy.

Particularly, it can be provided that the obtaining and deriving are performed periodically, and a period is less than 1min or less than 1s or less than 1ms. These time periods are particularly advantageous and allow for observing the characteristics of the generated entropy on a time scale that ensures that entropy is generated at high rates while the generated entropy is, overall, sufficiently reliable or exhibits, overall, the intended characteristics.

In one embodiment, the method further comprises obtaining the distribution function from the signal output by the physical entropy generator. By directly obtaining the distribution function from the signal output by the physical entropy generator, the further obtaining of the percentiles can be performed with reduced computational effort.

The present disclosure further relates to a computing system comprising programmable circuitry programmed with computer-executable instructions that, when executed, cause the computing system to perform a computer-implemented method according to any of the previous embodiments.

Brief description of the drawings

Figure 1      shows a schematic depiction of an exemplary physical entropy generator;

Figure 2      shows a flow scheme of a method according to one embodiment;

Figure 3      shows a flow scheme of a further method for taking actions based on derived information associated with the characteristic of entropy according to one embodiment.

Detailed description

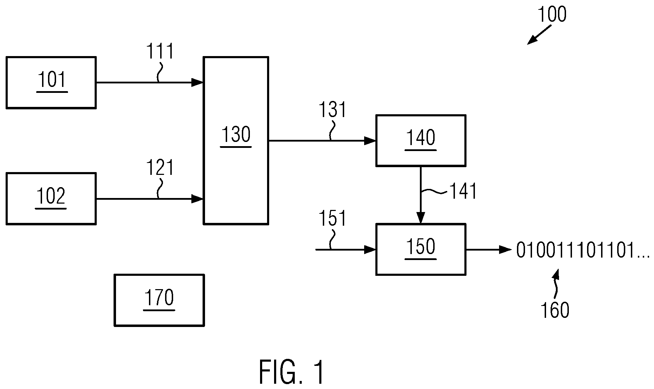

Figure 1 shows an exemplary physical entropy generator 100. This exemplary physical entropy generator 100 is only provided here for illustrative purposes and is not intended to be limiting. Rather, the invention may be realized with any physical entropy generator.

The output of this physical entropy generator is depicted as a sequence of bits 160 which take values of either 0 or 1. A physical entropy generator may, however, also generate random numbers with arbitrary values as will be explained in the following and the physical entropy generator according to embodiments of the present disclosure is not restricted to entropy generators that generate a sequence of bits 160 as output.

However, for the further discussion, this example of physical entropy generator 100 will be used as reference.

The physical entropy generator 100 may exemplarily comprise two laser sources 101 and 102. The first laser source may be driven in constant mode, i.e. may continuously emit a laser beam 111.

The second laser source 102 may be driven in pulsed mode so that the laser source 102 alternately emits a laser pulse 121 and does not emit a laser pulse.

The first laser source 101 and the second laser source 102 may be realized as laser diodes, for example, though this is not limiting. For example, the laser sources 101 and/or 102 may also be realized as a vertical cavity surface emitting laser (VCSEL) or other laser source.

As is shown in figure 1, the laser beams 111 and 121 reach, in propagation direction, an optical component 130 that is designed so as to combine the laser beams 111 and 121 to a combined laser beam 131. For example, the component 130 may comprise one or more mirrors that are arranged to change the propagation direction of the laser beams 111 and 121.

The combined laser beam 131 then propagates further to a photodetector 140. There, the received combined laser beam 131 will be detected and the detected signal translated into an electronic signal depending on the strength of the combined laser beam 131.

In more detail, the combined laser beam 131 constitutes an interference beam of the laser beams 111 and 121. As the first laser source 101 is driven in constant mode and the second laser source 102 is driven in pulsed mode, the laser beam 111 and the laser beam 121 will have random relative phase relation. This leads to the interference beam 131 having random strength so that the electrical signal output by the photodetector and denoted here as 141 has arbitrary/random strength. The output signal 141 of the photodetector 140 may, for example, be a current or a voltage signal.

In the exemplary embodiment of the physical entropy generator 100 depicted in figure 1, the output signal 141 is then provided to a comparator 150. Additionally, a reference signal (for example a reference voltage or a reference current) 151 is introduced into the comparator so that the output signal 141 and the reference signal 151 are compared by the comparator 150.

The output of the comparator then depends on the relation of the output signal 141 to the reference signal 151. For example, if the reference signal 141 is obtained by a constructive interference of the laser beams 111 and 121 at the photodetector 140, the output signal 141 may be larger than the reference signal 151 and the output of the comparator 150 may therefore be a bit of value "1" associated with this particular cycle of the physical entropy generator. In this context, a cycle constitutes the output of a signal of the photo detector in response to the second laser source 102 having emitted a laser pulse 121. Alternatively, if the output signal 141 is smaller than the reference signal 151, the output of the comparator 150 may be a bit with value "0" for this particular cycle of the physical entropy generator 100.

When consecutively generating laser pulses 121 with the second laser source 102 and obtaining respective output signals from the photo detector 140, a sequence of bits 160 is obtained. Depending on the frequency with which the second laser source 102 is driven in pulse mode (i.e. depending on the amount of laser pulses emitted per time period, for example per second), a corresponding frequency of output bits is obtained. If, for example, the second laser source is driven in pulse mode so as to generate one million laser pulses per second, there will also be generated one million bits per second as output 160 of the physical entropy generator 100.

As previously indicated, the physical entropy generator 100 is not limited to the realization explained above and is particularly not limited to outputting a sequence of bits 160 as output. The physical entropy generator may also output numbers. For example, the physical entropy generator may output the output signal 141 of the photo detector. The output signal 141 (for example a current of a voltage) has a particular value and this value is random as explained above. It thus in itself already constitutes a random number and could, in some applications, be further used for example for simulations as input if random numbers are required for the particular simulation.

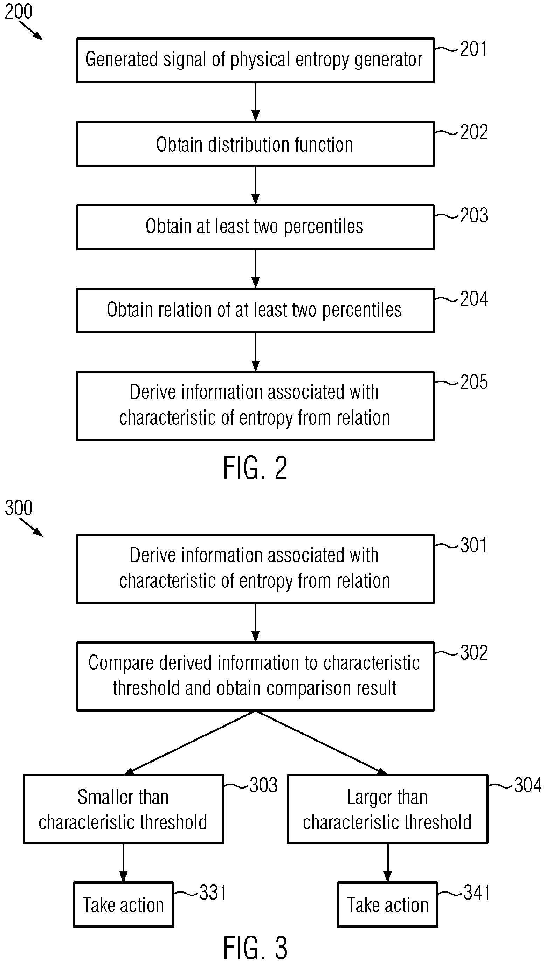

The physical entropy generator 100 may further comprise or may be associated with one or more sensors 170 that can determine environmental characteristics or characteristics associated with the physical entropy generator 100 itself. For example, there may be provided a sensor 170 that can determine the temperature of the surrounding environment of the physical entropy generator 100. Alternatively or additionally, there may be provided a sensor 170 that can determine the temperature of either or both the laser sources 101 and 102. Alternatively or additionally, a humidity sensor may be provided as sensor 170 or as part of the sensors 170 so as to measure the humidity in the surroundings of the physical entropy generator. Moreover, a tremor sensor 170 may be provided to determine whether there is any tremor experienced by the physical entropy generator. Also, a sensor 170 for determining the stability of the reference signal, for example, may be provided. These sensors can, as will be explained in the following, be used to provide an indication based on which a method according to any of figures 2 and 3 is performed so as to derive information associated with a characteristic of the entropy generated by the physical entropy generator 100 and to take appropriate action if need be.

Generally, the physical entropy generator 100 is subject to influences from the environment but also subject to changes in the components of the physical entropy generator 100 itself. For example, the interference signal 131 depends on the conditions under which the laser sources 101 and/or 102 are driven. For example, the phase relation between the first laser beam 111 and the second laser beam 121 can be influenced and biased towards particular values by the temperature of the second laser source 102. If, for example, the temperature of the second laser source increases, it may be more likely that the phase difference between the first laser beam and the second laser beam 111 and 121, respectively, is within a narrower range of values compared to a lower temperature. This does not mean that a particular phase relation could be predicted, because the phase relation is governed by the law of quantum mechanics, but this will nevertheless cause a bias towards particular values in the output 160. This means that the probability distribution function (and the cumulative distribution function) associated with the physical entropy generator changes with temperature. For example, instead of a uniformly and evenly distributed output of bits having a value of 1 or 0, there may be statistically more bits in the output having a value of 1 compared to bits having a value of 0 depending on the temperature of the second laser source 102. This has consequences for the amount of entropy actually generated per cycle of the physical entropy generator, and consequently, the amount of entropy indeed provided per bit in the signal 160 output by the physical entropy generator.

Other influences or deteriorations from the hypothetically perfectly random output of the physical entropy generator include but are not limited to bias and skewness of the probability distribution.

Within the context of the present invention, random numbers or random sequences of bits may be further used, for example, in encrypting communication or data or in simulations that require, as input, random numbers. It is therefore advantageous if a characteristic of the entropy (for example, the sequence of bits or a sequence of random numbers) generated by the physical entropy generator can be determined like, for example, whether the amount of entropy generated per bit by the entropy generator is above a minimum entropy threshold. This minimum entropy threshold may, for example, be required in order to ensure sufficiently high reliability of encryption or to ensure reasonable output of simulations performed using the entropy generated by the physical entropy generator 100.

Figure 2 depicts a flow scheme of an embodiment of a computer-implemented method for obtaining information associated with a characteristic of the entropy generated by the physical entropy generator exemplified above. The method can be performed on a general purpose computer or a specifically designed computer/hardware, like hardware including FPGAs or any other suitable hardware.

It is noted that the method according to figure 2 does not need to be executed in relation to a physical entropy generator in line with the embodiment of figure 1 but that also other physical entropy generators can be used or the method can be applied also in the context of those physical entropy generators.

The method 200 according to the embodiment in figure 2 begins, in a first step, with the obtaining or receiving of a signal generated by a physical entropy generator. For example, this signal may be the sequence of bits 160 output by the physical entropy generator or, in other embodiments, a sequence of random numbers as for example the output signal 141 of the photo detector 140. Alternatively, an analog-to-digital converter (ADC) may be provided subsequent to the photo detector 140 (not shown) which transforms the output of the photo detector 140 into a binary signal. This may encompass outputting a value of 1 if the signal of the photo detector 140 is larger than a threshold value applied to the ADC and outputting a value of 0 if the signal of the photo detector 140 is smaller than this threshold value. For the further description, reference to a sequence of random numbers or a sequence of bits or a sequence of random bits will be understood to include both, a sequence of random numbers and a sequence of random bits.

Subsequently, from this signal, a distribution function, particularly either a cumulative distribution function or the probability distribution function, may be obtained in step 202. This distribution function can either be obtained directly from the signal itself "on the fly", i.e. as the signal is received, or it can be obtained in any other reasonable way.

Particularly, the obtaining of the distribution function may be performed as a computer-implemented method. The respective computer may comprise a comparator which is a physical component that can perform the comparisons very fast so that it is possible to obtain the distribution function on a time scale that corresponds to the time scale at which the physical entropy generator generates entropy so that the method of figure 2 does not cause a delay in the generation of random numbers or bits.

Particularly, a method for obtaining the cumulative distribution function from the signal may comprise receiving the signal at a first port of a 1-bit comparator and applying a stepping signal at a second port of the comparator. This stepping signal may be a signal that has a stepping range that is less than the range of the signal received from the physical entropy generator. The method of obtaining the cumulative distribution function may comprise applying the stepping signal with a first value of the stepping signal to the second port and, in a subsequent step which takes place after the first step, the value of the stepping signal is increased or decreased by a particular value which may be called a stepping range and is again compared to the value of the signal in the immediately preceding step. The method can further comprise collecting, for each of these steps, an output value at an output port of the comparator, thereby collecting the output values for each of the steps and obtaining, from the collection of output values, the cumulative distribution function.

As the signal received at the computing system usually exhibits the same statistical characteristics also at different points in time, the value of the stepping signal can be increased in subsequently performed steps without this having an impact on the cumulative distribution function actually obtained as long as the time scale is sufficiently large. Alternatively, it is also possible to use a received signal several times as input to the comparator so as to apply different values of the stepping signal to the very same signal so as to obtain the cumulative distribution function.

It is understood that the steps 201 and 202 are not essential to the invention. It suffices that a distribution function of an output signal of a physical entropy generator is somehow provided. It may also be provided that the steps 201 and 202 do not comprise obtaining of the full distribution function and only obtaining part of the distribution function. Embodiments of the present disclosure also encompass that only percentiles of the distribution function are obtained. In this context, step 202 is to be understood as being optional and the inventive method essentially only requires obtaining of at least two percentiles where this is done optionally from the distribution function of part of the distribution function obtained in step 202.

After having optionally obtained the distribution function in step 202, the method can proceed in step 203 with obtaining at least two percentiles of the distribution function. Particularly, the percentiles may be quantiles of the distribution function. While these can be obtained from a "complete" distribution function, it is also possible to obtain the percentiles in step 203 without previously obtaining the complete distribution function in step 202 as mentioned above. It is further within the present invention that the percentiles are obtained without previously obtaining the distribution function at all so that step 202 can also be omitted completely.

For example, considering a cumulative distribution function, CDF, in the form of

$$CDF_{a,\sigma,CM}(z) = \int_{-1}^{1} \frac{Erfc\left[\dfrac{au - 2(z - CM)}{2\sqrt{2}\sigma}\right]}{2\pi\sqrt{1 - u^2}}\, du$$

Here, the CDF is of an arcsine convolved with a Gaussian function where Erfc denotes 1-Erf, where Erf is the commonly known error function $Erf(x) = \frac{2}{\sqrt{\pi}}\int_0^x e^{-y^2}\, dy$ and a constitutes the distance between peaks of the arcsine function given by $P_a(z) = \frac{1}{\pi}\dfrac{1}{\sqrt{(z + a/2)(\frac{a}{2} - z)}}$ and $\sigma$ is the average noise characterized through $g_\sigma(z) = \frac{1}{\sqrt{2\pi\sigma^2}}e^{-\frac{z^2}{2\sigma^2}}$ and CM is the center of mass of the cumulative distribution function whereas z stands for the comparator value. It is possible to obtain the quartiles $Q_0$ to $Q_4$ at least in a numerical manner. Particularly, the value of z may be set to the values z=0.25k with k $\in$ [0; 4] to obtain the respective quartiles $Q_k$ or percentiles. Also, other values are possible whereby other percentiles will be obtained from the cumulative distribution function in step 203.

Having obtained at least two percentiles in step 203, the method proceeds in step 204 where a relation of at least two percentiles is obtained. This may be any relation like, for example, a difference or quotient of the at least two percentiles or any combination thereof.

However, particularly with respect to determining a minimum entropy or a minimum trustworthy entropy, it has been found that a combination of differences of the percentiles and quotients of percentiles or of differences of percentiles provides helpful information on this particular characteristic (i.e. a minimum entropy or lower bound of the entropy generated per entropy cycle or a maximum trustworthy minimum entropy per entropy cycle) of the generated entropy. Also other relations may be used in order to, for example, determine bias or skewness of the distribution function as characteristics of the generated entropy.

Particularly in the case of determining a minimum entropy obtained with each cycle generated by the physical entropy generator (for example each bit generated by the physical entropy generator), it has been found by the inventors that if the difference $\Delta Q_{4332} = (Q_4 - Q_4) - (Q_3 - Q_2)$ is smaller than 0, then the device or physical entropy generator produces an amount of entropy per bit that at least corresponds to a minimum value $S_{min}$.

For the above cumulative distribution function, for example, it can be shown that this minimum entropy theoretically is at least 0.92 bits per cycle, i.e. an amount of 0.92 bits per generated bit of entropy is truly random.

It has further been found by the inventors that, for finding a maximum trustworthy minimum entropy generated with the physical entropy generator per entropy cycle, the relation $\frac{\Delta Q_{43}}{\Delta Q_{42}}\,\frac{Q_4 - Q_3}{Q_4 - Q_2}$ establishes a maximum or upper bound for a calculated minimum entropy that can still be considered trustworthy. This amount may, for example, be larger than the minimum entropy calculated above and particularly in the case of the above-specified cumulative distribution function, this maximum trustworthy minimum entropy is 0.941 bits per entropy cycle. This means that a real system, irrespective of how it actually behaves will, even if an empirically calculated minimum entropy is larger than this theoretical amount, only generate bits where it can only reliably be assumed that an amount corresponding to the maximum trustworthy minimum entropy is truly random.

In the subsequent step 205, the respective information associated with the characteristic of the entropy generated by the physical entropy generator may then be obtained from the calculated relation. For example, as explained above, the minimum entropy of an actual system may be determined by using the quartile difference obtained from $\Delta Q_{4332}$. In step 205, the minimum entropy generated per cycle of the physical entropy generator may be determined from this relation.

Additionally or alternatively, from the cumulative distribution function and particularly the relation $\frac{\Delta Q_{43}}{\Delta Q_{42}}$ can be used in step 205 to derive the maximum trustworthy minimum entropy generated per entropy cycle of the physical entropy generator. In this context, the minimum entropy and the maximum trustworthy minimum entropy constitute information on a particular characteristic of the entropy, namely the quality of entropy generated per bit or the amount of entropy generated per bit. Also other characteristics and information on other characteristics like the bias or skewness of the cumulative distribution function can be determined in this step.

The method described in figure 2 may be performed only once, for example when activating the physical entropy generator 100 or after a build-up time has lapsed. Alternatively or additionally, the method of any of the above embodiments may be periodically performed. For example, the method of any of the above embodiments may be performed every millisecond or every second or every 10s or every minute or at any other technically reasonable interval.

The periodicity of performing the method of any of the above embodiments may, for example, depend on the variability of the characteristics of the physical entropy generator. Particularly, if it is to be expected that environmental conditions or internal conditions of the physical entropy generator change over a small time scale (for example a few seconds) to such an extent that this has impact on the quality or characteristic of the entropy generated by the physical entropy generator, the method of any of the above embodiments may be performed every second or every 2s. In contrast, if the physical entropy generator is generally known to be stable also in view of changing environmental conditions, it may be sufficient for ensuring reliability of the generated entropy (as will also be explained in relation to figure 3) over a comparably long time scale and it may thus be sufficient to perform the method of any of the above embodiments only once every minute or only once every 20min or the like.

Alternatively or additionally, the method of any of the above embodiments may also be performed based on receiving an indictor indicating that the obtaining and/or deriving is or are to be performed, i.e. that at least the steps 204 to 205 are to be carried out. Additionally, also the distribution function may be newly calculated or obtained for the particular system each time the method in line with what was described in relation to figure 2 is performed.

The indicator may be derived from information obtained from one or more sensors, like the sensors 170 described in relation to figure 1 already. For example, if the temperature of the laser source 102 rises above a particular threshold or drops below a particular threshold and this is determined by the sensor 170, an indicator (for example a signal) can be generated that is representative of this information, i.e. of the dropping below or exceeding of a particular threshold for the temperature of the second laser source 102. Based on this indication and responsive to this, a method according to any of the embodiments described in relation to figure 2 may be performed.

This may for example be advantageous in order to take into account changes in the environmental or internal conditions of the physical entropy generator that are likely to impact the characteristics of the generated entropy that is to be monitored.

In this context, figure 3 shows an embodiment for taking actions based on the derived information associated with characteristics of entropy.

The method 300 begins with the step 301 which corresponds to the step 205, i.e. information associated with a characteristic of the entropy generated by the entropy generator is obtained from the respective relation of the percentiles. For example, the minimum entropy may have been determined in step 205 or 301, respectively.

In a subsequent step, the information associated with the characteristic of the entropy generated by the physical entropy generator is compared 302 to a characteristic threshold in order to obtain a comparison result. In this context, the characteristic threshold is a numerical value. Consequently, also the respective information will be assumed in this embodiment to be a numerical value. For example, the information may constitute or may be the minimum entropy as already explained above.

The characteristic threshold may be a preset characteristic threshold and may, for example, be defined based on requirements associated with the entropy generated by the physical entropy generator. For example, for encrypting information, it may be advantageous if the minimum entropy generated per entropy cycle by the physical entropy generator is comparably high and does not drop below 0.9 or 0.94 bits per bit of generated entropy (i.e. per entropy cycle). By comparing the derived minimum entropy to this characteristic threshold (for example determining the quotient or the difference), a comparison result is obtained 302. This comparison result may indicate that the derived information is smaller than the characteristic threshold 303 or that it is larger than the characteristic threshold 304.

In the embodiment of figure 3, the method then proceeds depending on whether the information is smaller than the characteristic threshold (step 303) or whether it is larger than the characteristic threshold (step 304). The case where the derived information equals the characteristic threshold may be summarized either in step 303 or in step 304 or it may be neglected.

In any case, if it is determined that the derived information is smaller than the characteristic threshold 303, then a first action 331 is taken. For example, in the embodiment where the information constitutes the minimum entropy and it is determined that the obtained minimum entropy is smaller than a characteristic threshold in step 303, the action 331 may comprise outputting information (for example an acoustic signal or visual information on a display) to a user that indicates that the minimum entropy reliably generated by the physical entropy generator is below a characteristic threshold and further actions may be necessary.

Alternatively, the action taken in step 331 may comprise discontinuing the entropy generation by the physical entropy generator so as to ensure that unreliable entropy is not used for, for example, encrypting communication. Also other actions may be taken depending on the circumstances. For example, if the temperature of the second laser source 102 (see figure 1) increases so that the minimum entropy generated drops below the characteristic threshold, the action 331 may also comprise activating a cooling system so as to cool down the second laser source 102 in one embodiment.

Alternatively, if it is determined that the information obtained is larger than a characteristic threshold in step 304, another action 341 may be taken that is not similar to the action 331. For example, information may be output regarding a confirmation that the generated entropy fulfills particular requirements. Moreover, the entropy generation may be continued upon this finding in step 304.

While, in the above example, the case where the derived information is smaller than the characteristic threshold (step 303) was considered disadvantageous for the state of the system or the generated entropy, this is not necessarily the case for all embodiments. It may also be that, if the derived information shows that it is smaller than the characteristic threshold 303, the system is working properly, whereas an exceeding of a particular characteristic threshold 304 is indicative of the physical entropy generator malfunctioning. In that case, the actions taken according to steps 331 and 341 may be exchanged.

The present invention also comprises a computing system comprising programmable circuity programmed with computer-executable instructions that, when executed, cause the respective computing system to perform a computer-implemented method according to any of the above embodiments. Particularly, the computing system may be realized as a general-purpose computer. Alternatively, it can also be realized as a FPGA or other programmed or programmable circuitry.

**Claims**

1. Computer-implemented method for obtaining information associated with a characteristic of entropy generated by a physical entropy generator, the method comprising:

   obtaining, from a distribution function of a signal output by the physical entropy generator, at least two percentiles of the distribution function;
   deriving, from a relation of the at least two percentiles, information associated with the characteristic of the generated entropy.

2. The computer-implemented method according to claim 1, wherein the distribution function is a cumulative distribution function or a probability distribution function of the signal output by the physical entropy generator.

3. The computer-implemented method according to claim 1 or 2, wherein the at least two percentiles comprise the second, third and fourth quartiles.

4. The computer-implemented method according to claim 3, wherein the relation comprises calculating a quartile difference of a difference between the fourth and third quartile and a difference between the third and second quartile.

5. The computer-implemented method according to claim 4, wherein the deriving comprises determining, if the quartile difference is smaller than a threshold, that the entropy per bit generated by the physical entropy generator is larger than a minimum entropy threshold per bit.

6. The computer-implemented method according to any of claims 3 to 5, wherein the relation comprises calculating a quotient of the difference between the fourth and third quartile and the difference between the fourth and second quartile.

7. The computer-implemented method according to claim 6, wherein the deriving comprises determining, based on the quotient, a maximum trustworthy minimum entropy per bit generated by the physical entropy generator.

8. The computer-implemented method according to any of claims 1 to 7, further comprising comparing the derived information associated with the characteristic to a characteristic threshold and obtaining a comparison result therefrom;
   the computer-implemented method further comprising providing an output based on the comparison result.

9. The computer-implemented method according to claim 8, further comprising outputting information and/or discontinuing the entropy generation, if the comparison result indicates that the entropy generated by the physical entropy generator is lower than the characteristic threshold.

10. The computer-implemented method according to any of claims 1 to 9, wherein the method comprises performing the obtaining and deriving periodically or continuously or based on receiving an indicator indicating that the obtaining and/or deriving are to be performed.

11. The computer-implemented method according to claim 10, wherein the obtaining and deriving are performed periodically and a period is less than 1min or less than 1s or less than 1ms.

**12.** The computer-implemented method according to any of claims 1 to 11, wherein the method further comprises obtaining the distribution function from the signal output by the physical entropy generator.

**13.** A computing system comprising programmable circuitry programmed with computer-executable instructions that, when executed, cause the computing system to perform a computer-implemented method according to any of claims 1 to 12.

FIG. 1

200

| Generated signal of physical entropy generator | ~201 |

↓

| Obtain distribution function | ~202 |

↓

| Obtain at least two percentiles | ~203 |

↓

| Obtain relation of at least two percentiles | ~204 |

↓

| Derive information associated with characteristic of entropy from relation | ~205 |

FIG. 2

300

| Derive information associated with characteristic of entropy from relation | ~301 |

↓

| Compare derived information to characteristic threshold and obtain comparison result | ~302 |

| Smaller than characteristic threshold | ~303 | | Larger than characteristic threshold | ~304 |

↓ ↓

| Take action | ~331 | | Take action | ~341 |

FIG. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALRIC ALTHOFF ET AL: "An Architecture for Learning Stream Distributions with Application to RNG Testing", 20170618; 1077952576 – 1077952576, 18 June 2017 (2017-06-18), pages 1-6, XP058364528, DOI: 10.1145/3061639.3062199 ISBN: 978-1-4503-4927-7 * Sections 3.1, 3.3, 3.4; Equations (1), (5), (6), (7); Algorithms 1-3.; figure 5 * | 1-13 | INV. G06F7/58 |
| X | US 2015/113028 A1 (BOPPANA RAJENDRA V [US] ET AL) 23 April 2015 (2015-04-23) * paragraphs [0005] – [0009], [0063] – [0066]; figures 1, 3 * | 1-13 | |
| | | | TECHNICAL FIELDS SEARCHED (IPC) |
| | | | G06F |

The present search report has been drawn up for all claims

| Place of search | Date of completion of the search | Examiner |
|---|---|---|
| Munich | 7 March 2023 | Winkelbauer, Andreas |

EPO FORM 1503 03.82 (P04C01)

## ANNEX TO THE EUROPEAN SEARCH REPORT
## ON EUROPEAN PATENT APPLICATION NO.

EP 22 38 2887

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2023

| Patent document cited in search report | | Publication date | Patent family member(s) | Publication date |
|---|---|---|---|---|
| US 2015113028 | A1 | 23-04-2015 | US 8868630 B1 <br> US 2015113028 A1 | 21-10-2014 <br> 23-04-2015 |

EPO FORM P0459

For more details about this annex : see Official Journal of the European Patent Office, No. 12/82